# EUROPEAN PATENT APPLICATION

(11) **EP 2 328 112 A1**
(43) Date of publication of application: **01.06.2011**
(21) Application number: 09306142.2
(22) Date of filing: 26.11.2009
(51) Int. Cl.: G06K 9/00, G06K 9/62

(54) **A method of recognizing an object in a digital image, corresponding computer program product, and device therefor**

(71) Applicant: Alcatel Lucent, 75008 Paris (FR)
(72) Inventor: RUEEGG, Andreas, 70469 Stuttgart (DE); SCHAICH, Frank, 70469 Stuttgart (DE)
(74) Representative: Brose, Gerhard

(57) **Abstract**

The invention concerns a method of recognizing an object in a digital image, the method comprising the steps of acquiring (101) the digital image, deriving (102) image data representative of the digital image, extracting (103) an image feature from the image data, receiving (104) a characteristic from a transmitter associated with the object, comparing (105) the image feature to the characteristic, and, based on the image feature, identifying (107) an instance of the object depicted in the digital image by establishing a match (106) between the im age feature and the characteristic. The invention further concerns a computer program product and a device therefor.

## Description

### Field of the Invention

The invention relates to a method of recognizing an object in a digital image to claim 1, a computer program product according to claim 8, and a device according to claim 9.

### Background

Within the field of artificial intelligence, computer vision is the science and technology of machines that see. As a scientific discipline, computer vision is concerned with the theory for building artificial systems that obtain information from images. Such images may take many forms, including video sequences, views from multiple cameras, or multi-dimensional data from a medical scanner. As a technological discipline, computer vision seeks to apply its theories and models to the construction of computer vision systems.

Object recognition is a sub-domain of computer vision concerned with the task of finding a given object in an image. In the paper "Pictorial Structures for Object Recognition", Intl, Journal of Computer Vision, 61(1), pp. 55-79, January 2005, the authors Pedro F. Felzenszwalb and Daniel P. Huttenlocher present a state-of-the-art framework for part-based modeling and object recognition.

A challenge for this conventional approach lies in the recognition of objects in a given image despite of variations in their scale, translation, or rotation, such variations brought about by the arbitrary perspective in which the image is acquired. Any partial obstruction from view of the objects to be recognized poses a further problem.

In this context, by object is meant any two- or three-dimensional entity, be it inanimate or living.

### Summary

It is an objective of the invention to present an improved approach to object recognition that enables a device to reliably recognize an object depicted in a digital image independent of the viewpoint from which the image is acquired. It is a further objective to increase the computational efficiency of such recognition.

This object is achieved by a method according to claim 1, a computer program product according to claim 8, or a device according to claim 9.

Consistently with the term's use in photography and optics, by digital image here is meant a discrete representation of a picture as used in computing. Also known as raster or bitmap images, digital images have a finite set of digital values called picture elements or pixels. The digital image contains a fixed number of rows and columns of pixels. Pixels are the smallest individual element in a digital image, holding quantized values that represent the brightness of a given color at any specific point.

A main idea of the invention is to obtain a characteristic of the object to be recognized from a transmitter associated with that object. If a corresponding image feature matches the characteristic thus received, the object is positively identified.

Further developments of the invention can be gathered from the dependent claims and the following description.

In the following the invention will be explained further making reference to the attached drawing.

To recognize, according to an embodiment of the invention an object in a digital image, the digital image is first acquired and representative image data is derived from that image. Based on the resulting image data, an image feature is extracted. Furthermore, a characteristic for comparison with the image feature is received from a transmitter associated with the object to be recognized. By establishing a match between the image feature and the characteristic, an instance of the object depicted in the digital image can be positively identified.

### Brief Description of the Figures

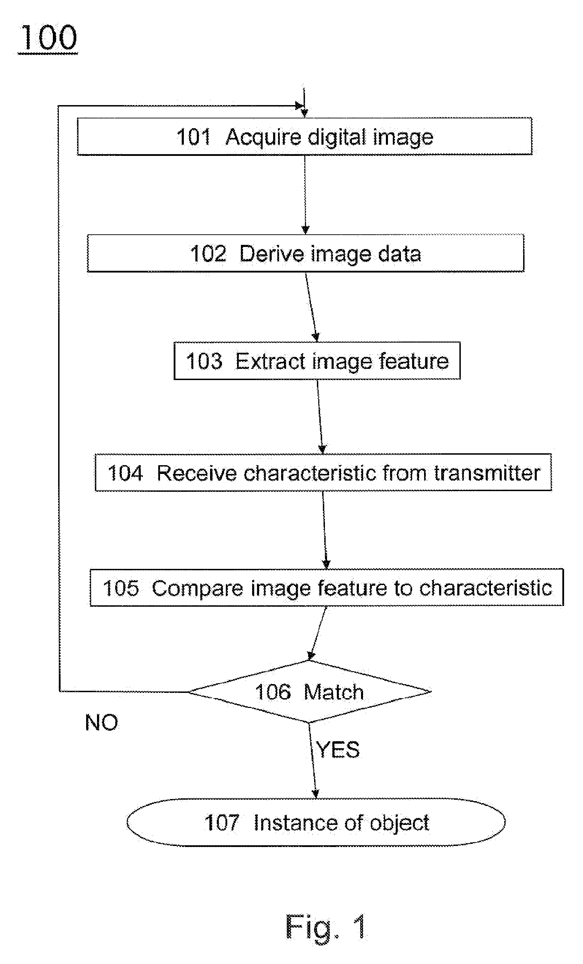

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, a third processing step 103, a fourth processing step 104, and a fifth processing step each represented by a rectangle. The flowchart 100 further comprises a decision 106, represented by a rhombus_{;} and a terminator 107, represented by a rounded rectangle. A flow of control passing through the processing steps 101 to 105, the decision 106, and the terminal 107 is represented by a set of arrows. An arrow starting at a first symbol and ending at a second symbol indicates that control passes from the first symbol to the second symbol. The two arrows starting at the decision 106 correspond to a positive or negative decision and are labeled accordingly.

In the embodiment at hand, to allow for an adequate mobility of the end user, the method is applied by means of a smartphone, that is, a mobile phone offering advanced capabilities such as computer-like functionality. To facilitate implementation of the method, the smartphone runs complete operating system software providing a standardized interface and platform for application developers. Further, to be prepared for a diversity of use cases, the smartphone comprises end-user features such as an integrated e-mail client, Internet browser, and e-book reader.

In an alternative embodiment, the method is implemented in an access control system, that is, a system which enables an authority to control access to areas and resources in a given physical facility or computer-based information system, In yet another embodiment, the method is applied by means of a time recording system.

In the first step 101, the smartphone acquires a digital image. By digital image acquisition, sometimes called digital imaging, is meant the creation of the digital image, typically from a physical scene. The digital image may be created directly from the physical scene by a camera or similar device. In an alternative embodiment, it may be obtained from another image on an analog medium, such as a photograph, photographic film, or printed paper, by an image scanner or similar device. The digital image may further be acquired by complex processing of non-image data, such as output data of tomographic equipmeant, side-scan sonar, or a radio telescope. In the art of digital imaging, such digitalization of analog real-world data is also known as digitizing.

In the second step 102, the smartphone derives image data representative of the digital image acquired in the first step 101. Each pixel of the image is typically associated to a specific position in a two-dimensional region and assigned a value consisting of one or more quantities or samples related to that position. To allow for an adequate level of control and accuracy throughout the subsequent steps, the smartphone makes use of a raw image format, that is, a format that represents the captured image in its entirety and devoid of any additional processing.

In an optional step (not depicted), to assert certain assumptions implied by the method, the smartphone pre-processes the image data. Such pre-processing may include, inter alia, re-sampling of the image data to ensure that the image coordinate system is correct, noise reduction to make certain that sensor noise does not introduce false information, contrast enhancement to ensure that relevant information can be detected, and scale-space representation to enhance the contained image structures at locally appropriate scales.

In a further optional step (not depicted), to guarantee that the image data outlives the execution of the program that created it in the second step 102, the smartphone saves that data to non-volatile storage such as its hard drive or flash memory. To further minimize redundancy for storage or transmission of the image data in an efficient form, the smartphone optionally makes use of image compression, that is, applies data compression to the image data to reduce its size.

In the third step 103, the smartphone extracts an image feature from the image data derived in the second step 102. In pattern recognition and image processing, by feature extraction is meant a special form of dimension reduction, that is, the transformation of the image data into a reduced representation set of features commonly named a features vector. To this end, the smartphone applies algorithms to the image data to detect and isolate various desired portions or shapes contained in the digital image. Typical examples of such features are lines, edges and ridges as well as localized interest points such as corners, blobs or points. More complex features taken into consideration by the smartphone may be related to texture, shape, or motion.

In the fourth step 104, the smartphone receives a characteristic from a transmitter associated with an object to be recognized. To facilitate comparison to the image feature extracted in the third step 103, the characteristic takes the form of an optical feature. Typical examples of such features are lines, edges and ridges as well as localized interest points such as corners, blobs or points. More complex features that may be considered characteristic are related to, inter alia, texture, shape, or motion.

If the characteristic refers to a person rather than to an inanimate object, the smartphone makes use of a facial recognition system. In this case, the characteristic may take the form of a feature of the subject's face, commonly called landmark in this context, For improved accuracy, the characteristic comprises measurements such as the relative position, size, and shape of the eyes, nose, cheekbones, and jaw. A recognition algorithm based on such distinguishing features is known as a geometric approach, whereas a photometric approach would distill an image into statistical values considered characteristic. To eliminate dependency on changes in lighting or viewing angle, the characteristic may be based on three-dimensional face recognition and relate to the surface of the subject's face, including features such as the contour of the eye sockets, nose, and chin. For improved recognition performance, the characteristic may be based on skin texture analysis, using visual details of the subject's skin such as unique lines, patterns, and spots, represented in a mathematical space. To allow for the recognition of anatomical features beyond the subject's face, body proportions such as the subject's height may constitute the characteristic. An advanced embodiment may even consider non-optical characteristics such as temperature, infrared or other electromagnetic radiation.

In an alternative embodiment, to eliminate the need for tea" ture extraction before transmitting the characteristic, the latter takes the form of a complete face image. In that embodiment, it is up to the smartphone to extract landmarks from the characteristic image. To minimize the amount of data to be transferred in the fourth step 104, the face image is normalized and compressed prior to transmission, only saving the characteristic data in the image that is useful for face detection.

In the fifth step 105, the smartphone compares the image feature extracted in the third step 103 to the characteristic received in the fourth step 104. To this end, the smartphone employs a recognition algorithm such as principal component analysis, linear discriminate analysis, elastic bunch graph matching, a hidden Markov model, or dynamic link matching.

In comparing the image feature to the characteristic during the fifth step 105, the smartphone seeks to bring about the decision 106, If a match can be established, the object is considered positively identified and the flow of control reaches its terminal 107. If not, to allow for the consideration of multiple proximate objects, the smartphone proceeds by comparing the image feature to a characteristic received from a different transmitter. After all such characteristics have been screened out, to allow for the consideration of multiple objects depicted In the same digital image, the smartphone extracts a different feature from the image and reiterates the comparisons outline above. In the case that no combination of the available image features and characteristics are found to match, to account for interim movement of the smartphone or any proximate object, the smartphone proceeds by acquiring an updated digital image, thus reverting to the first step 101.

Once a match has been established, the object is considered identified, and the flow of control has reached its terminal 107, the ascertained identity can form the basis for an augmentation of the digital image with additional, computer-generated imagery. The digital image being a live direct or indirect view of a physical real-world environment, the resulting, merged view is commonly called an augmented reality (AR) in the field of user interface techniques. To allow for an immediate presentation of the AR to an end user of the smartphone, the augmentation is performed in real-time. Typically, the augmentation is in semantic context with the environmental object identified, e.g., giving the name of a person depicted in the image.

To eliminate the need for a centralized infrastructure and for network connectivity on the part of the smartphone, the latter obtains any additional information for augmenting the digital image directly from the transmitter along with the characteristic, such as in the course of the fourth step 104. For instance, the transmitter may make available the digital equivalent of a business card along with the matching characteristic. In an alternative embodiment, such additional information may be obtained from a central database to which the smartphone is connected by means of a cellular or local area network. The source of information being transparent to the end user, the latter will perceive the additional imagery as an information layer on top of the underlying real-world view.

To present the resulting AR to the end user, the smartphone is equipped with a handheld display. The smartphone employs video see-through technology to overlay the graphical information to the physical world. Given the ubiquitous nature of camera- and display-equipped smartphones, a further benefit of the invention is its applicability to these popular devices. Preferably, a smartphone for use with an embodiment of the invention is further equipped with an accelerometer, global positioning system, or solid-state compass, all of which can be beneficial in providing location and direction information to support object recognition.

To achieve an even more immersive end-user experience, a device according to an alternative embodiment of the invention may make use of a head-mounted or helmet-Mounted display (HMD) instead of a handheld display. By HMD is meant any display device worn on the head or as part of a helmet comprising a display optic in front of one or each of the user's eyes.

For seamless connectivity with the transmitter, the smartphone is equipped with wireless personal area networking (WPAN) technology. By WPAN is meant a network for wirelessly interconnecting proximate devices. IEEE 802.15 is a widespread WPAN standard defined by the Institute of Electrical and Electronics Engineers (IEEE) based on the Bluetooth specifications. Alternative devices for use with an embodiment of the invention may be equipped with Infrared Data Association, ultra-wideband radio, Z-Wave, or ZigBee technology.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as to magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions, Moreover, all statements herein reciting principles, aspects, and embodiments of the invention, as well as specific example thereof, are intended to encompass equivalents thereof.

## Claims

1. A method of recognizing an object in a digital image, the method comprising the steps of
acquiring (101) the digital image,
deriving (102) image data representative of the digital image,
extracting (103) an image feature from the image data, and,
based on the image feature, identifying (107) an instance of the object depicted in the digital image,
**characterized in that** the method comprises the further steps of
receiving (104) a characteristic from a transmitter associated with the object and
comparing (105) the image feature to the characteristic,
wherein the identification (107) of the instance is effected by
establishing a match (106) between the image feature and the characteristic.

2. A method according to claim 1, **characterized in that** the method comprises the further step of
augmenting the digital image with computer-generated imagery based on the object.

3. A method according to claim 2, **characterized in that** the method comprises the further step of generating a merged view of the digital image and the computer-generated imagery.

4. A method according to claim 3, **characterized in that** the method comprises the further step of presenting the view to an end user.

5. A method according to any of the preceding claims, **characterized in that** the transmitter is attached to a personal area network and the characteristic is received by means of the personal area network.

6. A method according to claim 5, **characterized in that** the personal area network is a wireless personal area network based on either of the following:
an Infrared Data Association protocol,
a Bluetooth protocol,
ultra-wideband radio technology,
Z-Wave technology, and
a ZigBee protocol.

7. A method according to any of the claim 1 to 4, **characterized in that** the transmitter forms part of a radio-frequency identification tag and the characteristic is received by means of radio-frequency identification technology.

8. A computer program product comprising computer-executable instructions for performing a method when the program is run on a computer, the method comprising the steps of
acquiring (101) a digital image,
deriving (102) image data representative of the digital image,
extracting (103) an image feature from the image data, and,
based on the image feature, identifying (107) an instance of an object depicted in the digital image,
**characterized in that** the method comprises the further steps of
receiving (104) a characteristic from a transmitter associated with the object and
comparing (105) the image feature to the characteristic,
wherein the identification (107) of the instance is effected by
establishing a match (106) between the image feature and the characteristic.

9. A device programmed or configured to perform a method comprising the steps of
acquiring (101) a digital image,
deriving (102) image data representative of the digital image,
extracting (103) an image feature from the image data, and,
based on the image feature, identifying (107) an instance of an object depicted in the digital image,
**characterized in that** the method comprises the further steps of
receiving (104) a characteristic from a transmitter associated with the object and
comparing (105) the image feature to the characteristic,
wherein the identification (107) of the instance is effected by
establishing a match (106) between the image feature and the characteristic.

10. A device according to claim 9, **characterized in that** the device is a smartphone.
